# EUROPÄISCHE PATENTSCHRIFT

(11) **EP 1 859 000 B1**
(45) Veröffentlichungstag und Bekanntmachung des Hinweises auf die Patenterteilung: **23.07.2008**
(21) Anmeldenummer: 06724837.7
(22) Anmeldetag: 10.02.2006
(51) Int. Cl.: C09J 177/12, C08K 5/00

(54) **VERNETZBARE SCHMELZKLEBERMISCHUNG**
CROSS-LINKABLE HOT-MELT ADHESIVE BLEND
MELANGE D'ADHESIF FUSIBLE RETICULABLE

(30) Priorität: 10.02.2005 DE 102005006335; 29.08.2005 DE 102005040979
(43) Veröffentlichungstag der Anmeldung: 28.11.2007
(73) Patentinhaber: Bozzetto GmbH, 47805 Krefeld (DE)
(72) Erfinder: GOOSSENS, Bernhard, Dr., D-47652 Weeze (DE); JAHN, Holger, D-47802 Krefeld (DE); NOTZ, Ingo, D-47839 Krefeld (DE)
(74) Vertreter: Bülle, Jan
(86) Internationale Anmeldenummer: PCT/EP2006/050820
(87) Internationale Veröffentlichungsnummer: WO 2006/084887

(56) Entgegenhaltungen:
- DE-A1- 4 136 083
- GB-A- 1 463 900
- LEWIS D M ET AL: "Improved Fixation of Dyes on Polyamide Fibres. Part 1: Using 1,3,5-Triacroylamino-Hexahydro-s-Triazine as a Crosslinking Agent" DYES AND PIGMENTS, ELSEVIER APPLIED SCIENCE PUBLISHERS. BARKING, GB, Bd. 28, Nr. 3, 1995, Seiten 171-192, XP004033212 ISSN: 0143-7208

## Beschreibung

Die Erfindung betrifft eine vernetzbare Schmelzklebermischung zum Beschichten von textilen Flächengebilden, beispielsweise von Textilien, Leder, Schaumstoffen oder Kunststoffen. Insbesondere betrifft die Erfindung eine Schmelzklebermischung zum Beschichten von fixierbaren Einlagenstoffen für die Bekleidungsindustrie.

Die Verwendung von Schmelzmassen zum lösungsmittelfreien Beschichten (*Hotmelt-*Auftrag, Pulverpunktverfahren) oder zum rasterförmigen Beschichten von wässrigen Schmelzkleberdispersionen (Pastenpunkt oder Doppelpunkt-Verfahren) zur Verklebung von festen oder flexiblen Substraten, insbesondere von textilen Flächengebilden, ist im Stand der Technik bekannt.

Das Pulverpunktverfahren ist drucktechnisch ein Tiefdruckverfahren. Üblicherweise erwärmt man die Einlagestoffbahn durch Umschlingung einer beheizten Stahlwalze auf ca. 170-220°C und presst diese mit der Ware gegen eine 30-60°C warme Druckwalze, die in ihren punktartigen Vertiefungen das thermoplastische Klebstoffpulver enthält. Das Pulver selbst wird in die Vertiefungen durch eine Trichterrakel eingestrichen. Die Druckwalze (Gravurwalze, Punktwalze, Näpfchenwalze) druckt dann das in den Vertiefungen befindliche Pulver auf die heiße Einlagestoffbahn. Dadurch wird ein oberflächliches Anschmelzen und Agglomerieren des Pulvers erreicht, so dass die näpfchenförmigen Vertiefungen von Pulver entleert werden. Durch dieses Agglomerieren und/oder nachfolgendes Bestrahlen mit höhenverstellbaren Infrarot-Strahlern sintern die Pulverkörnchen jedes punktförmigen Pulverhäufchens glasartig zusammen und werden dadurch gleichzeitig festhaftend auf der Einlagestoffbahn verankert. Weiterhin sorgen die Infrarot-Strahlen für die Ausbildung einer glatten halbkugelförmigen Oberfläche der Klebepunkte.

Beim Pastenpunktverfahren wird üblicherweise eine wässrige Suspension aus feinteiligen thermoplastischen Klebstoffpulvern und Additiven, die Paste, durch die Löcher eines rotierenden, perforierten Zylinders, der Schablone, auf eine kalte Warenbahn gedruckt. Man pumpt die wässrige Klebemassendispersion durch eine Hohlrakel in das Innere der rotierenden Schablone. Durch Variation der Pastenviskositäten können Schablonen mit groben und feinsten Rastern verwendet werden. Das Rakelblatt der innenliegenden, verstellbaren Hohlrakel drückt die Paste durch die Schablonenlöcher auf die Warenbahn, die über eine harte oder mit Weichgummi überzogene Gegenwalze läuft. Anschließend erfolgt eine Trocknung der Pastenpunkte und nachfolgende Sinterung an die textile Warenbahn durch Umluft- und Infrarot-Strahler.

Beim Doppelpunktverfahren besteht ein Doppelpunkt üblicherweise aus einem hochviskosen oder vernetzten Unterpunkt und einem niedrigviskosen Oberpunkt. Der Auftrag des Unterpunktes erfolgt nach dem Rotationssiebdruckverfahren. Auf diesen noch feuchten Unterpunkt wird ein Klebstoffpulver aufgestreut, welches lediglich auf dem feuchten Pastenpunkt haftet. Das zwischen die Unterpunkte gefallene Oberpunktpulver wird nachfolgend abgesaugt. In einem Trockenkanal wird dem Unterpunkt das Wasser entzogen. Er wird an das Einlagensubstrat angesintert und beide Punkte werden miteinander verbunden. Der Unterpunkt sollte eine hochviskose Sperrschicht ausbilden, um ein Zurückschlagen in die Einlage zu verhindern. Der Schmelzklebstoff des Oberpunktes ist dann gezwungen, in Richtung des Oberstoffs zu laufen.

Herkömmliche Verbunde, die mit handelsüblichen Schmelzklebern auf Basis von Copolyamiden bzw. Copolyestern sowie deren Beschichtungssystemen hergestellt werden, haben den Nachteil, dass sie nach dem Verkleben ihre Thermoplastizität behalten. Daher werden sie durch Temperatureinwirkung, mechanische Beanspruchung oder Einwirkung von Lösungsmitteln negativ beeinflusst, was bis hin zur Delaminierung führen kann.

Es ist im Stand der Technik bekannt, die Thermoplastizität und die Löslichkeit der Klebeverbindungen von Schmelzklebern durch Vernetzung zu reduzieren bzw. zu eliminieren. So führen Isocyanat- oder Silanvernetzer, welche mit Feuchtigkeit reagieren, zu dreidimensionalen, unschmelzbaren (duroplastischen) Polymeren. Die Verwendung derartiger Vernetzer hat jedoch den Nachteil, dass die Systeme bis zur Verarbeitung unter Ausschluss von Feuchtigkeit aufbewahrt werden müssen.

Hydroxyfunktionelle oder aminofunktionelle Schmelzkleber können auch mit blockierten Isocyanaten vernetzt werden. Diese Vernetzer haben jedoch den Nachteil, dass die Deblockierungstemperatur üblicherweise oberhalb von 140°C liegt, so dass bei Reaktionszeiten, welche für die praktische Anwendung relevant sind, vergleichsweise hohe Temperaturen erforderlich werden, welche den Einsatz temperaturempfindlicher Substrate verhindern.

Die Vor- und Nachteile der so modifizierten Schmelzkleber sind in der Literatur beschrieben und dem Fachmann bekannt.

EP-A 598 873 offenbart für den *Hotmelt*-Auftrag die schichtweise Extrudierung einer Mischung aus hydroxy- oder amino-terminierten Schmelzklebern mit an der Oberfläche deaktiviertem Isocyanat. Diese Stoffmischung lässt sich jedoch nicht als Pulvergrundlage in der für einen rasterförmigen Aufdruck benötigten Korngröße von 1-80 µm in wässrigen Dispersionen verwenden, da das Isocyanat durch Wasser vollständig deaktiviert wird. Überdies erfordert die Herstellung aufwendige Extrudieranlagen.

EP-A 1 197 541 beschreibt die Verwendung mikroverkapselter PolyisocyanatDispersionen in Kombination mit amino-terminierten Copolyamiden oder Copolyestern zur Bildung einer wirkungsvollen Rückschlagsperre auf Basis wässriger Dispersionen. Die Herstellung solcher mikroverkapselter Polyisocyanatdispersionen ist jedoch aufwendig und kostspielig.

Eine Aufgabe der vorliegenden Erfindung bestand darin, Schmelzklebesysteme zur Verfügung zu stellen, welche Vorteile gegenüber den Systemen des Standes der Technik aufweisen. Bei Auftragung im Zuge des Pulverpunktverfahrens sollten die Schmelzklebesysteme nach Möglichkeit eine vernetzende Klebemasse liefern, welche bei produktionsüblicher oberflächlicher Ansinterung ihre latente Reaktivität behält und erst bei Erreichung der finalen Laminiertemperatur vollständig vernetzt. Ferner sollten die Schmelzklebesysteme bei Auftragung im Zuge des Pastenpunktverfahrens nach Möglichkeit als wässrige Dispersion auf das jeweilige Substrat aufgebracht werden können, während der Trocknung des aufgebrachten Punktes bei üblichen Trocknungsbedingungen ihre latente Reaktivität beibehalten und erst nachfolgend bei weiterer Temperaturerhöhung (Endlaminierung, Verklebung) irreversibel vernetzt werden können. Schließlich sollten die Schmelzklebersysteme bei Auftragung im Zuge des Doppelpunktverfahrens zum einen eine wirkungsvolle Rückschlagsperre aufbauen, zum anderen bei Endlaminierung eine Vernetzung ergeben und bei reduzierter/eliminierter Thermoplastizität eine verbesserte Waschbeständigkeit und verbesserte Lösungsmittelbeständigkeit gewährleisten, insbesondere im Vergleich zu nicht-vernetzten Schmelzklebesystemen des Standes der Technik.

Diese Aufgabe wird durch den Gegenstand der Patentansprüche gelöst.

Es wurde überraschend gefunden, dass bei Auftragung im Zuge des Pulverpunktverfahrens amino-terminierte (Co-)Polyamide, hydroxy-terminierte (Co-)Polyester und/oder amino-terminierte (Co-)Polyester in Kombination mit multifunktionellen Acrylamid-Vernetzern, beispielsweise Triacrylamidotrihydrotriazin (TATHT), als Schmelzkleber im Schmelzbereich von 90 bis 150°C eine vernetzende Klebemasse liefern, welche bei produktionsüblicher oberflächlicher Ansinterung ihre latente Reaktivität behält, wenn die zeitabhängige Temperaturbeaufschlagung auf den Pulverpunkt entsprechend gewählt wird und die Laminiertemperatur über dem Schmelzpunkt des Schmelzklebers liegt. Erst bei Erreichung der finalen Laminiertemperatur, beispielsweise von größer/gleich 130°C, erfolgt eine nahezu vollständige Vernetzung.

Ferner wurde überraschend gefunden, dass bei Auftragung im Zuge des Pastenpunktverfahrens amino-terminierte (Co-)Polyamide, hydroxy-terminierte (Co-)-Polyester und/oder amino-terminierte (Co-)Polyester in Kombination mit multifunktionellen Acrylamid-Vernetzern, beispielsweise Triacrylamidotrihydrotriazin (TATHT) oder multifunktionellen Acrylsäureester-Vernetzern, beispielsweise Trimethylolpropantriacrylat oder Triacrylsäureester aus ethoxyliertem Trimethylolpropan, in wässriger Dispersion ggf. unter Säurezusatz nicht spontan miteinander reagieren und selbst bei erhöhten Temperaturen (beispielsweise 110°C), innerhalb der Zeitspanne, die zur technischen Trocknung einer aufgedruckten wässrigen Paste üblich ist, noch keine durchgängige Addition erfolgt. Die quantitative Addition (=Vernetzung) erfolgt erst bei höheren Laminiertemperaturen, beispielsweise von größer/gleich 130°C.

Ferner wurde überraschend gefunden, dass bei Auftragung im Zuge des Doppelpunktverfahrens amino-terminierte (Co-)Polyamide, hydroxy-terminierte (Co-)Polyester und/oder amino-terminierte (Co-)Polyester in Kombination mit multifunktionellen Acrylsäureestern, beispielsweise ethoxiliertem Trimethylolpropantriacrylat, als wässrige Dispersionen aufgebracht werden können, wobei sie während der Trocknung durch selektive Vernetzung effektive Rückschlagsperren aufbauen (Unterpunkt). Auch liefert die Beaufschlagung der so gebildeten Unterpunkte mit Pulvermischungen aus amino-terminierten (Co-)-Polyamiden, hydroxy-terminierten (Co-)Polyestern und/oder amino-terminierten (Co-)Polyestern in Kombination mit multifunktionellen Acrylamiden, beispielsweise Triacrylamidotrihydrotriazin (TATHT) (Oberpunkt) ein Klebesystem, welches erst bei Erreichen der endgültigen Laminiertemperatur, beispielsweise von größer/gleich 130°C, vernetzt wird.

Die Erfindung betrifft eine vernetzbare Schmelzklebermischung umfassend
- eine Schmelzkleberkomponente, welche wenigstens
   □ ein amino-terminiertes (Co-)Polyamid und/oder
   □ einen hydroxy-terminierten (Co-)Polyester und/oder
   □ einen amino-terminierten (Co)Polyester
   umfasst, und
- eine Vernetzerkomponente, welche wenigstens einen multifunktionellen Acrylsäureester und/oder wenigstens ein multifunktionelles Acrylamid umfasst.

In einer bevorzugten Ausführungsform betrifft die Erfindung eine pulverförmige vernetzbare Schmelzklebermischung umfassend ein amino-terminiertes (Co-) Polyamid, einen hydroxy-terminierten (Co-)Polyester und/oder einen amino-terminierten (Co-)Poylester und einen Vernetzer aus der Stoffklasse der trifuntionellen Acrylamide. Die pulverförmige vernetzbare Schmelzklebermischung kommt erfindungsgemäß bevorzugt als Beschichtungsmaterial nach dem Pulverpunktverfahren zum Einsatz (oder zur Ausbildung der Oberpunkte beim Doppelpunktverfahren, siehe unten). In dieser Ausführungsform betrifft die Erfindung auch ein Verfahren zum Beschichten von Substraten mit Hilfe der erfindungsgemäßen pulverförmigen vernetzbaren Schmelzklebermischung.

In einer weiteren bevorzugten Ausführungsform betrifft die Erfindung eine vernetzbare Schmelzklebermischung auf Basis einer wässrigen Paste, umfassend ein amino-terminiertes (Co-)Polyamid, einen hydroxy-terminierten (Co-)Polyester und/oder einen amino-terminierten (Co-)Polyester und einen Vernetzer aus der Stoffklasse der trifunktionellen Acrylamide oder der trifunktionellen Acrylsäureester. Die vernetzbare Schmelzklebermischung auf Basis einer Paste kommt erfindungsgemäß bevorzugt zur rasterförmigen Beschichtung, beispielsweise von fixierbaren Einlagestoffen für die Bekleidungsindustrie, nach dem Pastenpunktverfahren zum Einsatz. In dieser Ausführungsform betrifft die Erfindung auch ein Verfahren zum Beschichten von Substraten mit Hilfe der erfindungsgemäßen Schmelzklebermischung auf Basis einer wässrigen Paste.

In einer weiteren bevorzugten Ausführungsform betrifft die Erfindung eine vernetzbare Schmelzkleberbeschichtung auf Basis einer wässrigen Dispersion, umfassend ein amino-terminiertes (Co-)Polyamid, einen hydroxy-terminierten (Co-)-Polyester und/oder amino-terminierten (Co-)Polyester und einen Vernetzer aus der Stoffklasse der trifunktionellen Acrylsäureester. Die vernetzbare Schmelzklebermischung auf Basis einer wässrigen Dispersion kommt erfindungsgemäß bevorzugt zur rasterförmigen Beschichtung, beispielsweise von fixierbaren Einlagestoffen für die Bekleidungsindustrie, nach dem Doppelpunktverfahren zum Einsatz, vorzugsweise zur Ausbildung vernetzbarer Unterpunkte während der Trocknung. Zum Bestreuen der Unterpunkte stellt die Erfindung weiterhin einen pulverförmigen Schmelzkleber oder eine Mischung aus einem Schmelzkleber und einem Vernetzer bereit (Oberpunkt). Insbesondere stellt die Erfindung eine pulverförmige vernetzbare Schmelzklebermischung bereit, welche ein amino-terminiertes (Co-)Polyamid, einen hydroxy-terminierten (Co-)Polyester und/oder einen amino-terminierten (Co-)-Polyester in Kombination mit einem Vernetzer aus der Stoffklasse der trifuntionellen Acrylamide umfasst und welche erfindungsgemäß bevorzugt als Streumaterial für den Oberpunkt nach dem Doppelpunktverfahren und als Beschichtungsmaterial nach dem Pulverpunktverfahren zum Einsatz kommt. In dieser Ausführungsform betrifft die Erfindung auch ein Verfahren zum Beschichten von Substraten mit Hilfe der erfindungsgemäßen Schmelzklebermischung auf Basis einer wässrigen Dispersion (Unterpunkt) und mit Hilfe der pulverförmigen vernetzbaren Schmelzklebermischung (Oberpunkt).

In einer bevorzugten Ausführungsform der erfindungsgemäßen Schmelzklebermischung liegt das relative Gewichtsverhältnis der Schmelzkleberkomponente zur Vernetzerkomponente im Bereich von 99,9:0,1 bis 50:50, bevorzugter von 98:2 bis 60:40, noch bevorzugter von 97:3 bis 70:30 und am bevorzugtesten von 95:5 bis 80:20.

In einer bevorzugten Ausführungsform umfasst die Schmelzkleberkomponente wenigstens ein amino-terminiertes (Co-)Polyamid. Zum Zwecke der Beschreibung umfasst der Begriff "(Co-)Polyamid" sowohl Copolyamide als auch Polyamide.

Bevorzugt umfasst die erfindungsgemäße Schmelzkleberkomponente ein amino-terminiertes (Co-)Polyamid mit einem Schmelzbereich innerhalb von 85-150°C, bevorzugter 85-135°C, bevorzugter von 90-130°C, noch bevorzugter von 95-125°C und am bevorzugtesten von 100-120°C. Geeignete Methoden zur Bestimmung des Schmelzbereichs eines (Co-)-Polyamids sind dem Fachmann bekannt. Bevorzugt erfolgt die Bestimmung des Schmelzbereichs nach DIN 53736 oder mit Hilfe einer Kofler-Heizbank.

Das amino-terminierte (Co-)Polyamid weist bevorzugt einen Schmelzflussindex MFR im Bereich von 5 bis 100 g/10 min, bevorzugter von 6 bis 40 g/10 min, noch bevorzugter von 7 bis 30 g/10 min und insbesondere von 8 bis 20 g/10 min auf, bestimmt nach DIN EN ISO 1133 bei 140°C und 2,16 kg.

Das amino-terminierte (Co-)Polyamid weist bevorzugt 100-800 mVal Aminogruppen pro kg Polyamid, bevorzugter 150-750 mVal Aminogruppen pro kg Polyamid, noch bevorzugter 200-700 mVal Aminogruppen pro kg Polyamid, am bevorzugtesten 250-650 mVal Aminogruppen pro kg Polyamid und insbesondere 300-600 mVal Aminogruppen pro kg Polyamid auf.

Das amino-terminierte (Co-)Polyamid weist bevorzugt eine intrinsische Viskosität [η] von 1,0 bis 2,0 mPas, bevorzugter 1,1 bis 1,9 mPas, noch bevorzugter 1,2 bis 1,8 mPas und insbesondere bevorzugt von 1,3 bis 1,7 mPas auf, vorzugsweise bestimmt gemäß DIN 51562-3.

Das amino-terminierte (Co-)Polyamid (PA) basiert vorzugsweise auf einem Polymer ausgewählt aus der Gruppe bestehend aus PA 4, PA 5, PA 6, PA 7, PA 8, PA 9, PA 10, PA 11, PA 12, PA 4,2, PA 6,6, PA 6,8, PA 6,9, PA 6,10, PA 6,12, PA 7,7, PA 8,8, PA 9,9, PA 10,9, PA 12,12, PA 6/6,6, PA 6,6/6, PA 6,2/6,2, PA 6,6/6,9/6, PA 12/6-6/6, PA 12/12-6/6, PA 6/6-6/12-6, PA 11 /6-6/6, PA 11 /6-12/6, PA 12/11/6-6/6, PA 12/6-6/6-12/6 und PA 12/6-6/6-10/6. Geeignete (Co-)Polyamide sind kommerziell verfügbar.

Das (Co-)Polyamid ist amino-terminiert. Dies bedeutet im Sinne der Beschreibung, dass bevorzugt mindestens 90 mol.-%, vorzugsweise mindestens 95 mol.-%, der terminalen Gruppen des (Co-)Polyamids Aminogruppen sind. Ein Beispiel für ein bevorzugtes amino-terminiertes Polyamid ist eine Verbindung der allgemeinen Formel (1): 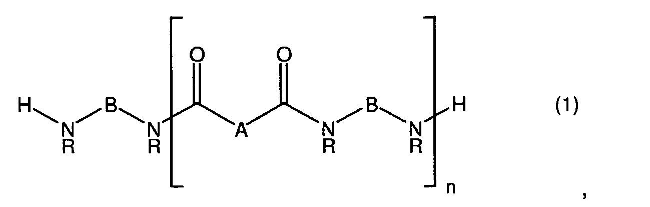 worin
A und B gleich oder verschieden ausgewählt sind aus der Gruppe bestehend aus -C₁-C₈-Alkylen- und -C₀-C₈-Alkylen-Phenylen-C₀-C₈-Alkylen-, ggf. substituiert mit 1 oder 2 Resten ausgewählt aus -F, -Cl, -C₁-C₈-Alkyl und -O-C₁-C₈-Alkyl;
R -H oder -C₁-C₈-Alkyl ist, vorzugsweise -H; und
n eine ganze Zahl ist, vorzugsweise im Bereich von 100 bis 100.000.

"-C₁-C₈-Alkylen-" im Sinne der Beschreibung bedeutet einen geradkettigen oder verzweigten Alkylenrest mit 1 bis 8 Kohlenstoffatomen, beispielsweise -CH₂CH₂-, -CH₂CH₂CH₂- oder -CH(CH₃)CH₂-.

"-C₁-C₈-Alkyl" im Sinne der Beschreibung bedeutet einen geradkettigen oder verzweigten Alkylrest mit 1 bis 8 Kohlenstoffatomen, beispielsweise -CH₃, -CH₂CH₃ oder -CH(CH₃)₂.

"-C₀-C₈-Alkylen-Phenylen-C₀-C₈-Alkylen-" im Sinne der Beschreibung bedeutet einen *ortho-, meta-* oder *para*-Phenylenrest, welcher ggf. in 1,2-, 1,3- oder 1,4-Position mit einem oder zwei Alkylenresten substituiert ist, z.B. -C₆H₄-, -CH₂-C₆H₄- oder -CH₂-C₆H₄-CH₂-.

In einer anderen bevorzugten Ausführungsform umfasst die Schmelzkleberkomponente wenigstens einen hydroxy-terminierten (Co-)Polyester. Zum Zwecke der Beschreibung umfasst der Begriff "(Co-)Polyester" sowohl Copolyester als auch Polyester.

Bevorzugt handelt es sich bei dem hydroxy-terminierten (Co-)Polyester um einen Copolyester, dessen Hauptkomponenten auf aliphatischen und/oder aromatischen Dicarbonsäuren und aliphatischen und/oder aromatischen Di- und/oder Triolen basieren. Bevorzugte aromatische Dicarbonsäuren sind Terephthalsäure und Isophthalsäure. Bevorzugte aliphatische Dicarbonsäuren sind Glutarsäure und Adipinsäure. Bevorzugte aliphatische Di- bzw- Triole sind Butandiol, Diethylenglykol und Triethylenglykol. In einer bevorzugten Ausführungsform basiert der hydoxyterminierte (Co-)Polyester auf einem Polymer ausgewählt aus der Gruppe bestehend aus Polycarbonat, Polyethylenterephthalat (PET), Polybutylenterephthalat (PBT) und Polyhydroxyalkanoat (wie z.B. Polyhydroxybutyrat (PHB)). Geeignete (Co-)Polyester sind kommerziell verfügbar.

Diese (Co-)Polyester sind hydroxy-terminiert. Dies bedeutet im Sinne der Beschreibung, dass bevorzugt mindestens 90 mol.-%, vorzugsweise mindestens 95 mol.-%, der terminalen Gruppen des (Co-)Polyesters Hydroxylgruppen sind. Ein Beispiel für einen bevorzugten hydroxy-terminierten Polyester ist eine Verbindung der allgemeinen Formel (2): 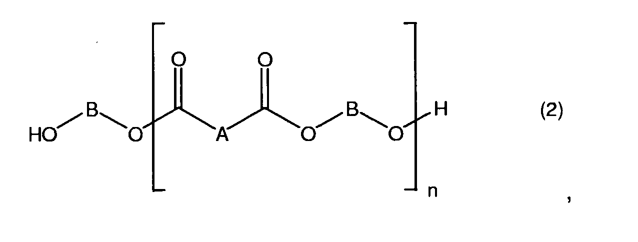 worin A, B und n wie vorstehend im Zusammenhang mit der allgemeinen Formel (1) definiert sind.

In einer anderen bevorzugten Ausführungsform umfasst die Schmelzkleberkomponente wenigstens einen amino-terminierten (Co-)Polyester, welcher hinsichtlich seines chemischen Struktur vorzugsweise wie der vorstehend beschriebene hydroxy-terminierte (Co-)Polyester definiert ist, im Unterschied dazu jedoch dadurch gekennzeichnet ist, dass bevorzugt mindestens 90 mol.-%, vorzugsweise mindestens 95 mol.-%, der terminalen Gruppen des (Co-)Polyesters Aminogruppen sind. Geeignete amino-terminierte (Co-)Polyester und Verfahren zu ihrer Herstellung sind dem Fachmann bekannt.

Der amino-terminierte (Co-)Polyester weist bevorzugt 100-800 mVal Aminogruppen pro kg Polyester, bevorzugter 150-750 mVal Aminogruppen pro kg Polyester, noch bevorzugter 200-700 mVal Aminogruppen pro kg Polyester, am bevorzugtesten 250-650 mVal Aminogruppen pro kg Polyester und insbesondere 300-600 mVal Aminogruppen pro kg Polyester auf.

Ein Beispiel für einen bevorzugten amino-terminierten Polyester ist eine Verbindung der allgemeinen Formel (3) 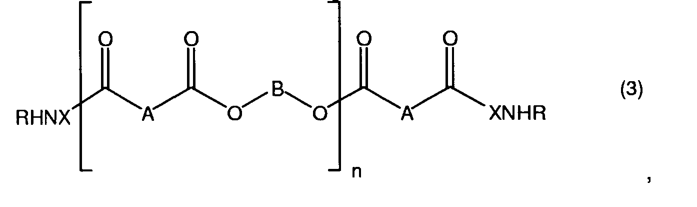 worin
A, B, n und R wie vorstehend im Zusammenhang mit den allgemeinen Formeln (2) und (3) definiert sind und
XNHR ausgewählt ist aus der Gruppe bestehend aus -NHR, -NH-C₁-C₈-Alkylen-NHR oder -NH-C₀-C₈-Alkylen-Phenylen-C₀-C₈-Alkylen-NHR.

Die Vernetzerkomponente der erfindungsgemäßen Schmelzklebermischung umfasst wenigstens einen multifunktionellen Acrylsäureester und/oder wenigstens ein multifunktionelles Acrylamid. Dabei umfasst der Begriff "Acryl-" im Sinne der Beschreibung auch solche Derivate der Acrylsäure, welche ggf. mit Alkylgruppen substituiert sind, z.B. auch Derivate der Methacrylsäure.

In einer bevorzugten Ausführungsform umfasst die Vernetzerkomponente einen multifunktionellen Acrylsäureester und/oder ein multifunktionelles Acrylamid mit mehr als zwei reaktiven Gruppen pro Molekül. Im Sinne der Beschreibung bezieht sich die Bezeichnung "reaktive Gruppe" im Zusammenhang mit dem multifunktionellen Acrylsäureester bzw. dem multifunktionellen Acrylamid auf eine funktionelle Gruppe, welche dazu geeignet ist, mit einer komplementären funktionellen Gruppe eines Bestandteils der Schmelzkleberkomponente zu reagieren, wodurch die vernetzende Wirkung der Vernetzerkomponente zum Ausdruck kommt. Bevorzugt handelt es sich bei der reaktiven Gruppe um eine olefinische Doppelbindung, welche - ggf. bei erhöhter Temperatur - durch ein Nucleophil angegriffen werden kann.

In einer bevorzugten Ausführungsform umfasst die Vernetzerkomponente einen multifunktionellen Acrylsäureester und/oder ein multifunktionelles Acrylamid mit mehr als zwei aktivierten Doppelbindungen pro Molekül. Im Sinne der Beschreibung bezieht sich die Bezeichnung "aktivierte Doppelbindung" im Zusammenhang mit dem multifunktionellen Acrylsäureester bzw. dem multifunktionellen Acrylamid auf eine olefinische Doppelbindung, deren Reaktivität in einer nucleophilen Additionsreaktion im Vergleich zu einem gewöhnlichen Olefin (Alken) erhöht ist. Die Aktivierung kann insbesondere durch elektronenziehende Substituenten erreicht werden. Ein Beispiel für eine aktivierte Doppelbindung ist das Michael-System (α,β-ungesättigtes Carbonyl), welches sich von Acrylsäureestern oder Acrylsäureamiden ableitet. Dieses kann bei erhöhter Temperatur nucleophil durch die terminalen Aminogruppen sowie die noch Wasserstoffatome tragenden Amidgruppen des amino-terminerten (Co-)Polyamids oder durch die terminalen Aminogruppen des amino-terminierten (Co-)Polyesters bzw. durch die terminalen Hydroxygruppen des hydroxy-terminierten (Co-)Polyesters angegriffen werden, wodurch es zur Vernetzung der Schmelzkleberkomponente durch die Vernetzerkomponente kommt.

Ein multifunktioneller Acrylsäureester im Sinne der Beschreibung ist bevorzugt ein Molekül, welches wenigstens zwei funktionelle Gruppen der allgemeinen Formel (I) aufweist 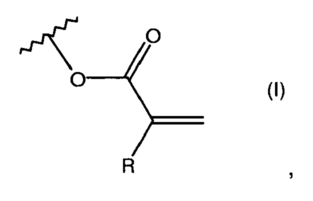 worin R unabhängig -H oder -C₁-C₈-Alkyl bedeutet.

Bevorzugt weist der multifunktionelle Acrylsäureester zwei, drei oder vier funktionelle Gruppen der allgemeinen Formel (I) auf, wobei R bevorzugt -CH₃ oder -H ist.

Ein multifunktionelles Acrylamid im Sinne der Beschreibung ist bevorzugt ein Molekül, welches wenigstens zwei funktionelle Gruppen der allgemeinen Formel (II) aufweist 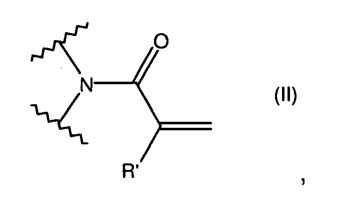 worin R' unabhängig -H oder -C₁-C₈-Alkyl bedeutet.

Bevorzugt weist das multifunktionelle Acrylamid zwei, drei oder vier funktionelle Gruppen der allgemeinen Formel (II) auf, wobei R' bevorzugt -CH₃ oder -H ist.

In einer bevorzugten Ausführungsform umfasst die Vernetzerkomponente ein trifunktionelles Acrylamid der allgemeinen Formel (III) 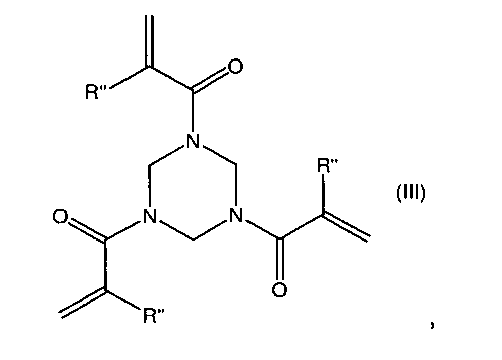 worin R" jeweils unabhängig voneinander -H oder -C₁-C₈-Alkyl, vorzugsweise -H oder -CH₃, bedeuten.

Ein bevorzugtes trifunktionelles Acrylamid der allgemeinen Formel (III) als Vernetzerkomponente ist Triacrylamidotrihydrotriazin (1,3,5-Triacryloylhexahydro-1,3,5-triazin, TATHT).

In einer anderen bevorzugten Ausführungsform umfasst die Vernetzerkomponente einen trifunktionellen Acrylsäureester ausgewählt aus der Gruppe bestehend aus Glycerin-tri(meth)acrylat, Glycerin-ethoxylat-tri(meth)acrylat, Glycerin-propoxylat-tri(meth)acrylat, Pentaerythrit-tri(meth)acrylat, Pentaerythrit-ethoxylat-tri(meth)acrylat Pentaerythrit-propoxylat-tri(meth)acrylat, Trimethylolpropan-tri(meth)acrylat, Trimethylolpropan-ethoxylat-tri(meth)acrylat und Trimethylolpropan-propoxylat-tri(meth)acrylat.

Im Sinne der Beschreibung umfasst der Begriff "(Meth)acrylat" sowohl Acrylat als auch Methacrylat.

Bei dieser Ausführungsform eignet sich die erfindungsgemäße Schmelzklebermischung insbesondere zur Verwendung im Zuge des Doppelpunktverfahrens, wobei insbesondere eine Mischung eines amino-terminierten (Co-)Polyamids, eines hydroxy-terminierten Polyesters und/oder eines amino-terminierten (Co-)Polyesters als Schmelzkleberkomponente in Kombination mit dem multifunktionellen Acrylsäureester als Vernetzerkomponente, vorzugsweise ethoxiliertem Trimethylolpropantriacrylat, als wässrige Dispersionen aufgebracht werden kann, um den Unterpunkt zu bilden. Für den Oberpunkt können bei dieser Ausführungsform vorteilhaft Schmelzklebermischungen verwendet werden, welche neben einem amino-terminierten (Co-)-Polyamid, einem hydroxy-terminierten (Co-)Polyester und/oder einem amino-terminierten (Co-)Polyester als Schmelzkleberkomponente ein multifunktionelles Acrylamid, beispielsweise Triacrylamidotrihydrotriazin (TATHT), als Vernetzerkomponente enthalten.

Ein Aspekt der Erfindung betrifft somit eine Schmelzklebersystem, welches zum Einsatz beim Doppelpunktverfahren, beispielsweise zur rasterförmigen Beschichtung von Einlagestoffen für die Bekleidungsindustrie, geeignet ist. Das erfindungsgemäße Schmelzklebersystem umfasst eine vernetzbare Schmelzklebermischung auf Basis einer wässrigen Dispersion umfassend ein amino-terminiertes (Co-)Polyamid, einen hydroxy-terminierten (Co-)Polyester und/oder einen amino-terminierten (Co-)-Polyester in Kombination mit einem Vernetzer aus der Stoffklasse der trifunktionellen Acrylsäureester, wobei aus dieser Schmelzklebermischung der Unterpunkt gebildet wird, welcher bei Trocknung vernetzt. Ferner umfasst das erfindungsgemäße Schmelzklebersystem einen pulverförmigen Schmelzkleber oder eine pulverförmige Mischung aus einer Schmelzkleberkomponente und einer Vernetzerkomponente, womit der Unterpunkt beaufschlagt wird, so dass der Oberpunkt gebildet wird, welcher bei späterer Laminierung ebenfalls vernetzen kann. Bevorzugt umfasst das erfindungsgemäße Schmelzklebersystem dazu eine pulverförmige Schmelzklebermischung aus einem amino-terminierten (Co-)Polyamid, einem hydroxy-terminierten (Co-)Polyester und/oder einem amino-terminierten (Co-)Polyester in Kombination mit einem Vernetzer aus der Stoffklasse der trifunktionellen Acrylamide als Streumaterial.

In einer bevorzugten Ausführungsform enthält die erfindungsgemäße Schmelzklebermischung keine, ggf. blockierten, Isocyanate.

Bevorzugt ist die erfindungsgemäße Schmelzklebermischung bei Erwärmen auf eine Temperatur entsprechend wenigstens der Schmelztemperatur bzw. wenigstens dem Schmelzbereich ihrer Schmelzkleberkomponente und/oder ihrer Vernetzerkomponente nahezu vollständig vernetzbar. Bevorzugt erfolgt eine nahezu vollständige Vernetzung erst bei einer Temperatur von wenigstens 120°C, bevorzugter wenigstens 130°C und noch bevorzugter wenigstens 140°C. Geeignete Methoden zur Bestimmung des Vernetzungsgrads von Polymeren sind dem Fachmann bekannt. In diesem Zusammenhang kann beispielsweise vollumfänglich verwiesen werden auf M. Rubinstein et al., Polymer Physics, Oxford University Press (2003) und J. Mark et al., Physical Properties of Polymers, Cambridge University Press, 3rd ed. (2004).

Bevorzugt liegt die erfindungsgemäße Schmelzklebermischung als wässrige Zusammensetzung vor, insbesondere als Paste. Bevorzugt beträgt der Wassergehalt mindestens 1 Gew.-%, bevorzugter mindestens 5 Gew.-%, noch bevorzugter mindestens 10 Gew.-%, am bevorzugtesten mindestens 25 Gew.-% und insbesondere um 50 Gew.-% bezogen auf das Gesamtgewicht der Schmelzklebermischung.

Vorzugsweise liegt die erfindungsgemäße Schmelzklebermischung in Form einer wässrigen Dispersion, einer wässrigen Paste oder in Form eines Pulvers vor.

Liegt die erfindungsgemäße Schmelzklebermischung als Pulver vor, so weist das Pulver bevorzugt eine mittlere Teilchengröße zwischen 80 und 200 µm auf. In einer anderen bevorzugten Ausführungsform liegt das Pulver mit feineren Kornfraktionen im Bereich von 1 bis 120 µm, vorzugsweise 1 bis 80 µm, vor.

Liegt die erfindungsgemäße Schmelzklebermischung als wässrige Paste vor, so liegt der Gewichtsanteil der Summe aus Schmelzkleberkomponente und Vernetzerkomponente dabei bevorzugt im Bereich von 25 bis 99 Gew.-%, bevorzugter von 35 bis 95 Gew.-%, noch bevorzugter von 50 bis 90 Gew.-%, am bevorzugtesten von 60 bis 85 Gew.-% und insbesondere von 65 bis 80 Gew.-%, bezogen auf das Gesamtgewicht der Schmelzklebermischung.

Liegt die erfindungsgemäße Schmelzklebermischung als wässrige Dispersion vor, so liegt der Gewichtsanteil der Summe aus Schmelzkleberkomponente und Vernetzerkomponente dabei bevorzugt im Bereich von 1,0 bis 99 Gew.-%, bevorzugter von 5,0 bis 95 Gew.-%, noch bevorzugter von 7,5 bis 75 Gew.-%, am bevorzugtesten von 10 bis 60 Gew.-% und insbesondere von 15 bis 50 Gew.-%, bezogen auf das Gesamtgewicht der Schmelzklebermischung.

Die erfindungsgemäße Schmelzklebermischung enthält vorzugsweise eines oder mehrere der folgenden eigenschaftsverbessernden Additive:
- Verdickungsmittel,
- Dispergiermittel,
- Weichmacher,
- Netzmittel,
- Gleitmittel/Laufverbesserer und/oder
- organische Säuren.

Geeignete eigenschaftsverbessernde Additive sind dem Fachmann bekannt. In diesem Zusammenhang kann beispielsweise vollumfänglich verwiesen werden auf G. Wypych, Handbook of Plasticizers, Noyes Publications (2003); S.Al-Malaika et al., Specialty Polymer Additives: Principles and Applications, Blackwell Publishing, Inc. (2002); J.C.J. Bart, Additives in Polymers: Industrial Analysis and Applications, John Wiley & Sons, Ltd. (2005); DE-A 20 07 971; DE-A 22 29 308; DE-A 24 07 505; und DE-A 25 07 504.

In einer bevorzugten Ausführungsform enthält die erfindungsgemäße Schmelzklebermischung eine Säure, vorzugsweise eine organische Säure. Es wurde gefunden, dass beim Zusammenbringen von bestimmten Schmelzkleberkomponenten mit bestimmten Vernetzerkomponenten je nach chemischer Zusammensetzung eine spontane Vernetzung erfolgen kann, welche erwünscht (Unterpunkt), aber auch unerwünscht (Pastenpunkt) sein kann. Beispielsweise verläuft die Reaktion von ethoxylierten Trimethylolpropantriacrylaten (wasserlöslich) mit amino-terminierten Copolyamiden (üblicherweise nicht wasserlöslich, jedoch in Wasser quellbar) in wässrigen Formulierungen (z.B. in Druckpasten) bereits bei Raumtemperatur vergleichsweise schnell, so dass es mitunter zu einer spontanen Vernetzung kommen kann. Es wurde jedoch gefunden, dass diese spontane Vernetzungsreaktion durch Zusatz geeigneter Säuren, bevorzugt organischer Säuren, insbesondere aliphatischer Carbonsäuren, kontrolliert werden kann. Beispiele für geeignete Säuren sind Ameisensäure, Essigsäure, Propionsäure, Oxalsäure, Malonsäure, Glutarsäure, Fumarsäure, Maleinsäure, Zitronensäure, Benzoesäure, Phenylessigsäure, Benzolsulfonsäure, p-Toluolsulfonsäure, etc.

Es wurde gefunden, dass die Protonierung der Aminogruppen der amino-terminierten (Co-)polyester und der damit einhergehende Verlust der nucleophilen Eigenschaften ausreicht, eine spontane Vernetzung zu unterdrücken, ohne jedoch gleichzeitig auch die Laminierung bei erhöhten Temperaturen (z.B. bei 140°C) in der Schmelze zu verhindern. Insbesondere bei Verwendung der erfindungsgemäßen Schmelzklebermischung im Pastenpunktverfahren ist daher der Zusatz geeigneter Säuren bevorzugt.

Die erfindungsgemäße Schmelzklebermischung zeichnet sich dadurch aus, dass sie eine ausgezeichnete Primärhaftung zwischen zwei zu verklebenden Substraten, insbesondere textilen Flächengebilden, gewährleistet. Bevorzugt beträgt die Primärhaftung auf Baumwolle oder Viskose wenigstens 14 N/5 cm, bevorzugter wenigstens 16 N/5 cm, noch bevorzugter wenigstens 18 N/5 cm, am bevorzugtesten wenigstens 20 N/5 cm und insbesondere wenigstens 22 N/5 cm.

Bevorzugt ändert sich die Haftung zwischen zwei mit Hilfe der erfindungsgemäßen Schmelzklebermischung verklebten textilen Flächengebilden nicht oder nur unwesentlich, wenn das Laminat einer 60°C-Wäsche, vorzugsweise nach ISO 4319, ASTM D 2960-84 bzw. DIN 44983, und/oder einer chemischen Reinigung, vorzugsweise nach ISO 4319, ASTM D 2960-84 bzw. DIN 44983 unterzogen wird. Bezogen auf die Primärhaftung verringert sich die Haftung nach Durchführung einer 60°C-Wäsche und/oder einer chemischen Reinigung bevorzugt um höchstens 20%, bevorzugter um höchstens 15%, noch bevorzugter um höchstens 10%, am bevorzugtesten um höchstens 5% und insbesondere um höchstens 2%.

Ein weiterer Aspekt der Erfindung betrifft die Verwendung der vorstehend beschriebenen, vernetzbaren Schmelzklebermischung als Schmelzkleber, vorzugsweise für textile Flächengebilde. Vorzugsweise wird die Schmelzklebermischung dabei für das Pulverpunkt-, Pastenpunkt- oder Doppelpunktverfahren verwendet. Erfolgt die Verwendung für das Doppelpunktverfahren, so wird die Schmelzklebermischung vorzugsweise zur Erzeugung des Ober- und/oder Unterpunktes verwendet.

Ein weiterer Aspekt der Erfindung betrifft ein Verfahren zur Beschichtung von Substraten, vorzugsweise von textilen Flächengebilden, umfassend den Schritt
- Auftragen einer vorstehend beschriebenen vernetzbaren Schmelzklebermischung auf das Substrat, wobei die Schmelzkleberkomponente und die Vernetzerkomponente gleichzeitig oder nacheinander aufgetragen werden.

In einer bevorzugten Ausführungsform des erfindungsgemäßen Verfahrens erfolgt die Auftragung nach dem Pulverpunktverfahren, nach dem Pastenpunktverfahren oder nach dem Doppelpunktverfahren.

Erfolgt die Auftragung nach dem Doppelpunktverfahren, so wird die erfindungsgemäße vernetzbare Schmelzklebermischung bevorzugt als Unterpunkt und/oder als Oberpunkt aufgetragen.

Ein weiterer Aspekt der Erfindung betrifft ein Verfahren zum Laminieren von Substraten umfassend die Schritte
(a) Beschichten wenigstens eines ersten Substrates, vorzugsweise eines textilen Flächengebildes, mit einer vorstehend beschriebenen vernetzbaren Schmelzklebermischung und
(b) Laminieren des gemäß Schritt (a) erhaltenen Substrates mit wenigstens einem weiteren Substrat bei einer Temperatur, die wenigstens so hoch ist, dass eine nahezu vollständige Vernetzung der Schmelzklebermischung eintritt.

In einer bevorzugten Ausführungsform des erfindungsgemäßen Laminierverfahrens entspricht die Temperatur in Schritt (b) wenigstens dem Schmelzpunkt bzw. Schmelzbereich der Schmelzkleberkomponente und/oder der Vernetzerkomponente, vorzugsweise der Schmelzkleberkomponente.

Ein weiterer Aspekt der Erfindung betrifft ein Substrat, vorzugsweise ein textiles Flächengebilde, welches mit einer vorstehend beschriebenen vernetzbaren Schmelzklebermischung beschichtet ist.

Im folgenden wird die Erfindung anhand von Beispielen erläutert. Diese Beispiele dienen nur der Erläuterung der Erfindung und sind nicht einschränkend hinsichtlich ihres Umfangs auszulegen.

### Beispiel 1a (Pastenpunktverfahren):

Ein amino-terminiertes Copolyamid ( z.B. 1-80 µm, Schmelzbereich 85-135°C, Schmelzviskosität 10-100 g/10min bei 140°C, mval Amin/kg 100-800) und TATHT (Triacrylamidotrihydrotriazin) wurden mit handelsüblichen Dispergatoren und Verdickern sowie organischen Säuren, wie beispielsweise in DE-B 20 07 971, DE-B 22 29 308, DE-B 24 07 505 und DE-B 25 07 504 beschrieben, zu einer druckbaren Paste verarbeitet und mit handelsüblichen Rotationdruckschablonen auf *Nonwoven* (PET/PA-Mischung mit einem Flächengewicht von ca. 25 g/m²) bei einer Trockenauflage von 7-12 g/m² gedruckt.

Nach Trocknung bei 110°C und einwöchiger Lagerung des bedruckten Vlieses bei Raumtemperatur wurde dieses bei 140°C (15 sec, 4 N/cm²) gegen einen Acetat-Oberstoff versiegelt und der Verbund einer 60°C-Wäsche sowie einer chemischen Reinigung unterzogen; danach wurde die Haftung des Verbundes ermittelt.

### Ergebnis:

Primärhaftung: Vliesabriss
60°C-Wäsche : Vliesabriss
Chemische Reinigung: Vliesabriss

### Beispiel 1b:

In der Rezeptur laut Beispiel 1a wurde der Vernetzer TATHT durch den Triacrylsäureester aus ethoxyliertem Trimethylolpropan ersetzt. Nach Druck und Trocknung bei 110°C sowie einwöchiger Lagerung bei Raumtemperatur wurde das bedruckte Vlies bei 140°C (15 sec, 4N/cm²) gegen einen Acetatoberstoff versiegelt und die Wärmebeständigkeit des Verbundes bei 150°C geprüft.

### Ergebnis:

Der Verbund blieb unter Gewichtsbelastung stabil und delaminierte nicht.

### Vergleichsbeispiel 1:

Die entsprechende Analogrezeptur gemäß Beispiel 1, jedoch ohne die Vernetzer TATHT bzw. Trimethylolpropan(EO)ₓ-triacrylat, lieferte nach Fixierung unter identischen Bedingungen:
Primärhaftung: Vliesabriss
60°C-Wäsche: Delaminierung
Chemische Reinigung: Delaminierung
Wärmestandfestigkeit bei 150°C: Delaminierung

### Beispiel 2 (Doppelpunktverfahren):

Ein amino-terminiertes Copolyamid gemäß Beispiel 1 wurde mit gängigen Dispergatoren und Verdickern wie in Beispiel 1 beschrieben unter Zusatz von ethoxiliertem Trimethylolpropantriacrylat zu einer druckbaren Paste verarbeitet und mit einer Rotationssiebdruckanlage mit einer z.B. CP 66 Schablone auf ein relativ offenes HB-texturiertes Polyestergewirk (Flächengewicht 33 g/m²) gedruckt. Der noch nasse Pastenpunkt (Auftrag trocken 3 g/m², erfindungsgemäßer Unterpunkt) wurde a) mit reinem amino-terminierten Copolyamid - Vergleichsoberpunkt - b) mit einer Pulvermischung aus amino-terminiertem Copolyamid und TATHT - erfindungsgemäßer Oberpunkt - berieselt, nach Absaugung des Pulverüberschusses in der Trocknerpassage bei 125°C getrocknet und angesintert. Die Auflage des Oberpunktes betrug jeweils 6 g/m².

Nach einwöchiger Lagerung bei Raumtemperatur wurde die beschichteten Gewirke bei 140°C (15 sec, 4 N/cm²) gegen einen Acetat-Oberstoff versiegelt und der Verbund einer 60°C-Wäsche sowie einer chemischen Reinigung unterzogen.

Ein analoger Versuch wurde ohne Vernetzer im Unterpunkt durchgeführt.
Danach wurde der Haftung der Verbundmaterialien ermittelt.

Die Rückvernietung wurde manuell nach einem Bewertungsmaßstab von 1 (keine Haftung zum Prüfverbund) bis 6 (voller Durchschlag) bewertet.

### Ergebnis:

Unterpunkt ohne Vernetzer/Oberpunkt ohne Vernetzer:
   Primärhaftung: 16 N/5 cm
   Wäsche 60°C: 6 N/5 cm
   Chemische Reinigung: Delaminierung
   Rückvernietung: 5
Unterpunkt mit erfindungsgemäßem Vernetzer/Oberpunkt ohne Vernetzer:
   Primärhaftung: 18 N/5 cm
   Wäsche 60°C: 9 N/5 cm
   Chemische Reinigung: 3,5 N/5 cm
   Rückvernietung: 1
Unterpunkt ohne Vernetzer/Oberpunkt mit erfindungsgemäßem Vernetzer:
   Primärhaftung: 18 N/5 cm
   Wäsche 60°C: 17 N/5 cm
   Chemische Reinigung: 14 N/5 cm
   Rückvernietung: 4
Unterpunkt mit erfindungsgemäßem Vernetzer/Oberpunkt mit erfindungsgemäßem Vernetzer:
   Primärhaftung: 20 N/5cm
   Wäsche 60°C: 19 N/5cm
   Chemische Reinigung: 18 N/5cm
   Rückvernietung: 1

### Beispiel 3 (Pulverpunktverfahren):

Eine Pulvermischung aus amino-terminiertem Copolyamid und TATHT wurde mit einer Gravurwalze CP 66 auf ein PET-Gewebe (Flächengewicht 45 g/m²) aufgetragen (Auflage 10 g/m²), bei 125°C an der Oberfläche angesintert und bei 140°C mit einer Wolle/Polyestermischung bei einem Lineardruck von 4 N fixiert.

Der Verbund wurde einer 60°C-Wäsche sowie einer chemischen Reinigung unterzogen; anschließend wurden die Haftwerte ermittelt.

### Ergebnis:

Primärhaftung: 22 N/ 5cm
Wäsche 60°C: 21 N/5cm
Chemische Reinigung: 20 N/5cm

Ein Vergleichsversuch wurde ohne Zumischung eines Vernetzers durchgeführt:
Ergebnis ohne Vernetzer:
   Primärhaftung: 22 N/ 5cm
   Wäsche 60°C: 8 N/5cm
   Chemische Reinigung: 12 N/ 5cm

## Patentansprüche

1. Vernetzbare Schmelzklebermischung umfassend
- eine Schmelzkleberkomponente, welche wenigstens ein amino-terminiertes (Co-)Polyamid umfasst und
- eine Vernetzerkomponente, welche wenigstens einen multifunktionellen Acrylsäureester und/oder wenigstens ein multifunktionelles Acrylamid umfasst.

2. Schmelzklebermischung nach Anspruch 1, **dadurch gekennzeichnet, dass** die Schmelzkleberkomponente ein amino-terminiertes (Co-)Polyamid mit einem Schmelzbereich von 90-150°C umfasst.

3. Schmelzklebermischung nach Anspruch 1 oder 2, **dadurch gekennzeichnet, dass** die Vernetzerkomponente ein multifunktionelles Acrylamid und/oder einen multifunktionellen Acrylsäureester mit mehr als zwei reaktiven Gruppen pro Molekül umfasst.

4. Schmelzklebermischung nach Anspruch 3, **dadurch gekennzeichnet, dass** die Vernetzerkomponente ein multifunktionelles Acrylamid und/oder einen multifunktionellen Acrylsäureester mit mehr als zwei aktivierten Doppelbindungen pro Molekül umfasst.

5. Schmelzklebermischung nach einem der vorstehenden Ansprüche, **dadurch gekennzeichnet, dass** die Vernetzerkomponente Triacrylamidotrihydrotriazin (TATHT) und/oder ethoxyliertes Trimethylol-propantriacrylat umfasst.

6. Schmelzklebermischung nach einem der vorstehenden Ansprüche, **dadurch gekennzeichnet, dass** sie eine organische Säure enthält.

7. Schmelzklebermischung nach Anspruch 6, **dadurch gekennzeichnet, dass** die organische Säure ausgewählt ist aus der Gruppe bestehend aus Ameisensäure, Essigsäure, Propionsäure, Oxalsäure, Malonsäure, Glutarsäure, Fumarsäure, Maleinsäure und Zitronensäure.

8. Schmelzklebermischung nach einem der vorstehenden Ansprüche, **dadurch gekennzeichnet, dass** sie in Form einer wässrigen Dispersion oder in Form eines Pulvers vorliegt.

9. Verwendung einer Schmelzklebermischung nach einem der vorstehenden Ansprüche als Schmelzkleber.

10. Verwendung nach Anspruch 9, **dadurch gekennzeichnet, dass** sie als Schmelzkleber für textile Flächengebilde erfolgt.

11. Verwendung nach Anspruch 9 oder 10, **dadurch gekennzeichnet, dass** sie als Schmelzkleber
- im Pulverpunktverfahren,
- im Pastenpunktverfahren oder
- im Doppelpunktverfahren
erfolgt.

12. Verfahren zur Beschichtung von Substraten umfassend den Schritt
- Auftragen einer vernetzbaren Schmelzklebermischung nach einem der Ansprüche 1 bis 8 auf das Substrat, wobei die Schmelzkleberkomponente und die Vernetzerkomponente gleichzeitig oder nacheinander aufgetragen werden.

13. Verfahren nach Anspruch 12, **dadurch gekennzeichnet, dass** die Substrate textile Flächengebilde sind.

14. Verfahren nach Anspruch 12 oder 13, **dadurch gekennzeichnet, dass** die Auftragung nach dem Pulverpunktverfahren, dem Pastenpunktverfahren oder dem Doppelpunktverfahren erfolgt.

15. Verfahren nach Anspruch 14, **dadurch gekennzeichnet, dass** die Auftragung nach dem Doppelpunktverfahren erfolgt und die vernetzbare Schmelzklebermischung als Unterpunkt und/oder als Oberpunkt aufgetragen wird.

16. Verfahren zum Laminieren von Substraten umfassend die Schritte
(a) Beschichten wenigstens eines ersten Substrates mit einer vernetzbaren Schmelzklebermischung nach einem der Ansprüche 1 bis 8; und
(b) Laminieren des gemäß Schritt (a) erhaltenen Substrates mit wenigstens einem weiteren Substrat bei einer Temperatur, die wenigstens so hoch ist, dass eine nahezu vollständige Vernetzung der Schmelzklebermischung eintritt.

17. Verfahren nach Anspruch 16, **dadurch gekennzeichnet, dass** die Substrate textile Flächengebilde sind.

18. Verfahren nach Anspruch 16 oder 17, **dadurch gekennzeichnet, dass** die Temperatur in Schritt (b) wenigstens dem Schmelzpunkt bzw. Schmelzbereich der Schmelzkleberkomponente und/oder der Vernetzerkomponente entspricht.

19. Substrat beschichtet mit einer vernetzbaren Schmelzklebermischung nach einem der Ansprüche 1 bis 8.

20. Substrat nach Anspruch 19, **dadurch gekennzeichnet, dass** es sich um ein textiles Flächengebilde handelt.

## Claims

1. A crosslinkable hot-melt adhesive mixture comprising
- a hot-melt adhesive component, which comprises at least one amino-terminated (co)polyamide and
- a crosslinking component, which comprises at least one multifunctional acrylic acid ester and/or at least one multifunctional acrylamide.

2. A hot-melt adhesive mixture according to claim 1, **characterised in that** the hot-melt adhesive component comprises an amino-terminated (co)polyamide with a melting range of from 90 to 150°C.

3. A hot-melt adhesive mixture according to claim 1 or claim 2, **characterised in that** the crosslinking component comprises a multifunctional acrylamide and/or a multifunctional acrylic acid ester having more than two reactive groups per molecule.

4. A hot-melt adhesive mixture according to claim 3, **characterised in that** the crosslinking component comprises a multifunctional acrylamide and/or a multifunctional acrylic acid ester having more than two activated double bonds per molecule.

5. A hot-melt adhesive mixture according to any one of the preceding claims, **characterised in that** the crosslinking component comprises triacrylamidotrihydrotriazine (TATHT) and/or ethoxylated trimethylolpropane triacrylate.

6. A hot-melt adhesive mixture according to any one of the preceding claims, **characterised in that** it contains an organic acid.

7. A hot-melt adhesive mixture according to claim 6, **characterised in that** the organic acid is selected from the group consisting of formic acid, acetic acid, propionic acid, oxalic acid, malonic acid, glutaric acid, fumaric acid, maleic acid and citric acid.

8. A hot-melt adhesive mixture according to any one of the preceding claims, **characterised in that** it is present in the form of an aqueous dispersion or in the form of a powder.

9. Use of a hot-melt adhesive mixture according to any one of the preceding claims as a hot-melt adhesive.

10. Use according to claim 9, **characterised in that** it proceeds as a hot-melt adhesive for textile fabric.

11. Use according to claim 9 or claim 10, **characterised in that** it proceeds as a hot-melt adhesive
- in the powder point method,
- in the paste point method or
- in the double point method.

12. A method of coating substrates comprising the step of
- applying a crosslinkable hot-melt adhesive mixture according to any one of claims 1 to 8 onto the substrate, the hot-melt adhesive component and the crosslinking component being applied simultaneously or one after the other.

13. A method according to claim 12, **characterised in that** the substrates are textile fabrics.

14. A method according to claim 12 or claim 13, **characterised in that** application proceeds using the powder point method, the paste point method or the double point method.

15. A method according to claim 14, **characterised in that** application proceeds according to the double point method and the crosslinkable hot-melt adhesive mixture is applied as the bottom point and/or as the top point.

16. A method of laminating substrates comprising the steps of
(a) coating at least a first substrate with a crosslinkable hot-melt adhesive mixture according to any one of claims 1 to 8; and
(b) laminating the substrate obtained according to step (a) with at least one further substrate at a temperature which is at least high enough for virtually complete crosslinking of the hot-melt adhesive mixture to take place.

17. A method according to claim 16, **characterised in that** the substrates are textile fabrics.

18. A method according to claim 16 or claim 17, **characterised in that** the temperature in step (b) corresponds at least to the melting point or melting range of the hot-melt adhesive component and/or the crosslinking component.

19. A substrate coated with a crosslinkable hot-melt adhesive mixture according to any one of claims 1 to 8.

20. A substrate according to claim 19, **characterised in that** it is a textile fabric.

## Revendications

1. Mélange adhésif en masse fondue réticulable, comprenant
- un composant adhésif en masse fondue, qui comprend au moins un (co)polyamide terminé par amino et
- un composant réticulant, qui comprend au moins un ester de l'acide acrylique multifonctionnel et/ou au moins un acrylamide multifonctionnel.

2. Mélange adhésif en masse fondue selon la revendication 1, **caractérisé en ce que** le composant adhésif en masse fondue comprend un (co)polyamide terminé par amino avec une plage de fusion de 90-150°C.

3. Mélange adhésif en masse fondue selon la revendication 1 ou 2, **caractérisé en ce que** le composant réticulant comprend un acrylamide multifonctionnel et/ou un ester de l'acide acrylique multifonctionnel comprenant plus de deux groupes réactifs par molécule.

4. Mélange adhésif en masse fondue selon la revendication 3, **caractérisé en ce que** le composant réticulant comprend un acrylamide multifonctionnel et/ou un ester de l'acide acrylique multifonctionnel comprenant plus de deux doubles liaisons activées par molécule.

5. Mélange adhésif en masse fondue selon l'une quelconque des revendications précédentes, **caractérisé en ce que** le composant réticulant comprend de la triacrylamidotrihydrotriazine (TATHT) et/ou du triacrylate de triméthylpropane éthoxylé.

6. Mélange adhésif en masse fondue selon l'une quelconque des revendications précédentes, **caractérisé en ce qu'**il contient un acide organique.

7. Mélange adhésif en masse fondue selon la revendication 6, **caractérisé en ce que** l'acide organique est choisi dans le groupe constitué par l'acide formique, l'acide acétique, l'acide propionique, l'acide oxalique, l'acide malonique, l'acide glutarique, l'acide fumarique, l'acide maléique et l'acide citrique.

8. Mélange adhésif en masse fondue selon l'une quelconque des revendications précédentes, **caractérisé en ce qu'**il se trouve sous forme d'une dispersion aqueuse ou sous forme d'une poudre.

9. Utilisation d'un mélange adhésif en masse fondue selon l'une quelconque des revendications précédentes, comme adhésif en masse fondue.

10. Utilisation selon la revendication 9, **caractérisée en ce qu'**elle est réalisée comme adhésif en masse fondue pour structures planes textiles.

11. Utilisation selon la revendication 9 ou 10, **caractérisée qu'**elle est réalisée comme adhésif en masse fondue
- dans un procédé par points de poudre (powder dot)
- dans un procédé par points de pâte (paste dot)
- dans un procédé à double point (double dot).

12. Procédé pour le revêtement de substrats comprenant l'étape
- d'application d'un mélange adhésif en masse fondue réticulable selon l'une quelconque des revendications 1 à 8 sur le substrat, le composant adhésif en masse fondue et le composant réticulant étant appliqués simultanément ou consécutivement.

13. Procédé selon la revendication 12, **caractérisé en ce que** les substrats sont des structures planes textiles.

14. Procédé selon la revendication 12 ou 13, **caractérisé en ce que** l'application est réalisée selon le procédé par points de poudre, par points de pâte ou le procédé à double point.

15. Procédé selon la revendication 14, **caractérisé en ce que** l'application est réalisée sur le procédé à double point et le mélange adhésif en masse fondue réticulable est appliqué comme point inférieur et/ou point supérieur.

16. Procédé pour le laminage de substrats comprenant les étapes
(a) de revêtement d'au moins un premier substrat avec un mélange adhésif en masse fondue réticulable selon l'une quelconque des revendications 1 à 8 ; et
(b) de laminage du substrat obtenu selon l'étape (a) comprenant au moins un autre substrat à une température qui est au moins d'un niveau tel qu'il se produit une réticulation quasiment complète du mélange adhésif en masse fondue.

17. Procédé selon la revendication 16, **caractérisé en ce que** les substrats sont des structures planes textiles.

18. Procédé selon la revendication 16 ou 17, **caractérisé en ce que** la température dans l'étape (b) correspond au moins au point de fusion ou à la plage de fusion du composant adhésif en masse fondue et/ou du composant réticulant.

19. Substrat revêtu avec un mélange adhésif en masse fondue réticulable selon l'une quelconque des revendications 1 à 8.

20. Substrat selon la revendication 19, **caractérisé en ce qu'**il s'agit d'une structure plane textile.
